(19) Europäisches Patentamt
European Patent Office
Office européen des brevets

(11) Veröffentlichungsnummer: **0 049 889**
**B1**

(12) # EUROPÄISCHE PATENTSCHRIFT

(45) Veröffentlichungstag der Patentschrift: **25.04.84**

(51) Int. Cl.³: **C 08 G 59/64,** C 07 C 91/14

(21) Anmeldenummer: **81108214.8**

(22) Anmeldetag: **12.10.81**

(54) **Basische Härtungsmittel für Glycidylpolyäther.**

(30) Priorität: **11.10.80 DE 3038536**

(43) Veröffentlichungstag der Anmeldung: **21.04.82 Patentblatt 82/16**

(45) Bekanntmachung des Hinweises auf die Patenterteilung: **25.04.84 Patentblatt 84/17**

(84) Benannte Vertragsstaaten: **CH DE FR GB LI**

(56) Entgegenhaltungen:
**US - A - 3 352 913**
**US - A - 3 470 248**
**US - A - 3 641 149**

(73) Patentinhaber: **Ruhrchemie Aktiengesellschaft, Bruchstrasse 219, D-4200 Oberhausen 13 (DE)**

(72) Erfinder: **Bernhagen, Wolfgang, Dr., Dipl.-Chem., Froschheide 19, D-4330 Mülheim/Ruhr (DE)**
Erfinder: **Springer, Helmut, Drostenkampstrasse 24, D-4200 Oberhausen 13 (DE)**

(74) Vertreter: **Reichelt, Karl-Heinz, Dr., m. Br. Ruhrchemie Aktiengesellschaft Abt. PLD Postfach 13 01 60, D-4200 Oberhausen 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Basische Härtungsmittel für Glycidylpolyäther

Es ist bekannt, Formkörper auf der Basis von Epoxid-Polyaddukten durch Umsetzen von Glycidylpolyäther mit Umsetzungskomponenten auf der Basis cycloaliphatischer Amine herzustellen. Nach der DE-PS 1 520 680 werden als basische Umsetzungskomponenten Verbindungen der allgemeinen Formel

$$H_2N-C_nH_{2n}-A-C_mH_{2m}-NH_2$$

verwendet, worin A einen mono- oder polycyclischen aliphatischen Kohlenwasserstoff darstellt und n und m eine ganze Zahl von 1 bis 5 bedeuten.

Die mit den bekannten basischen Verbindungen gewonnenen Epoxid-Polyaddukte weisen Eigenschaften auf, die denen entsprechen oder sogar überlegen sind, die mit sauren Umsetzungskomponenten hergestellt wurden.

Überraschenderweise hat sich herausgestellt, daß die guten, für die Verwendung der Epoxid-Polyaddukte wichtigen physikalischen Eigenschaften noch weiter verbessert werden können, wenn ein spezielles polycyclisches Hydroxiamin als Härtungsmittel verwendet wird.

Gegenstand der Erfindung ist ein basisches Härtungsmittel für Glycidylpolyäther auf Basis cycloaliphatischer Amine. Es ist dadurch gekennzeichnet, daß es die Verbindung der allgemeinen Formel

$$H_2N-C_nH_{2n}-A-C_mH_{2m}-OH$$

enthält, worin A einen mono- oder polycyclischen aliphatischen Kohlenwasserstoffrest darstellt und n und m eine ganze Zahl von 1 bis 5 bedeuten.

Besonders gute Produkte werden erhalten, wenn man als basische Härtungsmittel Aminomethyl-hydroxymethyl-tricyclodecan einsetzt.

Das neue basische Härtungsmittel kann sowohl allein als auch in Mischung mit anderen basischen Härtungsmitteln verwendet werden. Bevorzugt sind Mischungen, die mindestens 10 Gew.-% des neuen Härtungsmittels enthalten.

Das erfindungsgemäße Härtungsmittel ist eine farblose, viskose Flüssigkeit. Seine Siedetemperatur (1013 mbar) liegt bei ca. 350° C. Sie ist in Methanol, Propanol und Isobutanol löslich.

Die Herstellung des Härtungsmittels kann nach bekannten Verfahren erfolgen. So kann man von Dicyclopentadien ausgehen, das in Gegenwart von Kobaltkatalysatoren mit Kohlenmonoxid und Wasserstoff zu dem entsprechenden Oxialdehyd umgesetzt wird. Das Reaktionsprodukt wird anschließend mit Ammoniak und Wasserstoff unter Druck behandelt.

Das erfindungsgemäße Härtungsmittel eignet sich zur Umsetzung mit sämtlichen üblichen Glycidyl-Polyäthern. Glycidyl-Polyäther erhält man, wenn man Epichlorhydrinverbindungen mit mehrwertigen, bevorzugt zweiwertigen Alkoholen umsetzt. Hierbei erfolgt in einer ersten Reaktionsstufe unter Anwendung katalytischer Mengen an NaOH die Bildung chlorierter Hydroxyether, die in einer zweiten Stufe unter Abspaltung von HCl in Gegenwart von NaOH zum entsprechenden Glycidylether weiter reagieren. So ergibt sich aus Epichlorhydrin (1-Chlor-2,3-epoxypropan) und Bisphenol A (2,2-Bis-(p-hydroxyphenyl)-propan) das 2,2-Bis-(p-glycidyloxyphenyl)-propan, indem 2 Mole Epichlorhydrin mit Alkohol des zweiwertigen Bisphenol A reagieren.

Die Herstellung langkettiger, sog. Advancement-Produkte kann durch Umsetzung von 2,2-Bis-(p-glycidyloxy-phenyl)-propan mit Bisphenol A in Gegenwart von Ammoniumsalzen durchgeführt werden. Dies führt in bekannter Weise zu Kettenmolekülen, wobei sowohl deren Länge als auch die Art der Endgruppen (phenolische Hydroxyl- oder Glycidylethergruppen) lediglich vom Molverhältnis der beiden difunktionellen Reaktionspartner abhängen.

An die Stelle von Bisphenol A (2,2-Bis-(p-hydroxyphenyl)-propan können auch andere zweiwertige Alkohole, wie Butandiol-1,4, Neopentylglykol (2,2-Dimethylpropandiol-(1,3)), treten. Ihre Umsetzung mit Epichlorhydrinderivaten führt ebenfalls zu entsprechenden Glycidylethern.

Besondere Bedeutung haben Härtungsreaktionen, die zur Herstellung vernetzter Polymerer aus Glycidyl-Polyethern geeignet sind.

Man setzt das erfindungsgemäße Härtungsmittel vorteilhaft in ungefähr der zur Umsetzung mit dem zu härtenden Glycidyl-Polyether erforderlichen stöchiometrischen Menge ein, wobei die Glycidyl-Polyether mit den nach der Erfindung einzusetzenden Verbindungen in an sich bekannter Weise umgesetzt werden.

Die mit dem erfindungsgemäßen Härtungsmittel hergestellten Epoxid-Polyaddukte sind den mit den bisher bekannten aliphatischen oder cycloaliphatischen Aminen gewonnenen Epoxid-Polyaddukten im Hinblick auf mechanische Festigkeit überlegen.

Die nach der Erfindung gewonnenen Epoxid-Polyaddukte sind als Bindemittel, als Laminier- und Gießharze, Kunststoffmörtel sowie Werkzeuge, Fußbodenbeläge, elektrotechnische Gegenstände, verwendbar. Ein besonderer Vorteil besteht darin, daß sie ohne weiteres in Verbindung mit Harzen anderer Verbindungstypen verarbeitet und eingesetzt werden können.

**Patentansprüche**

1. Basisches Härtungsmittel für Glycidyl-Polyäther auf Basis cycloaliphatischer Amine, dadurch gekennzeichnet, daß es die Verbindung bzw. die Verbindungen der allgemeinen Formel

$$H_2N-C_nH_{2n}-A-C_mH_{2m}-OH$$

enthält, worin A einen mono- oder polycyclischen aliphatischen Kohlenwasserstoffrest darstellt und n und m eine ganze Zahl von 1 bis 5 bedeuten.

2. Basisches Härtungsmittel nach Anspruch 1, dadurch gekennzeichnet, daß die Verbindung Aminomethyl-hydroxymethyl-tricyclodecan verwendet wird.

3. Basisches Härtungsmittel nach Anspruch 1 und 2, dadurch gekennzeichnet, daß die Härtungsmittel nach Anspruch 1 und 2 in Mischung mit mindestens einer bekannten Härtungskomponente auf Basis aliphatischer, aromatischer oder cycloaliphatischer Amine verwendet werden, wobei die Verbindung bzw. die Verbindungen der Formel

$$H_2N-C_nH_{2n}-A-C_mH_{2m}-OH$$

mindestens 10 Gewichtsprozent der Mischung ausmachen müssen.

**Claims**

1. Basic hardening agent for glycidyl polyethers on the basis of cycloaliphatic amines, characterised in that it contains the compound or the compounds of the general formula:

$$H_2N-C_nH_{2n}-A-C_mH_{2m}-OH$$

wherein A represents a mono or polycyclic aliphatic hydrocarbon group and n and m stand for a whole number from 1 to 5.

2. Basic hardening agent according to claim 1, characterised in that the compound aminomethyl-hydroxymethyl-tricyclodecane is used.

3. Basic hardening agent according to claims 1 and 2, characterised in that the hardening agents according to claims 1 and 2 are mixed with at least one known hardening component on the basis of aliphatic, aromatic or cycloaliphatic amines, whereby the compound or compounds of the formula

$$H_2N-C_nH_{2n}-A-C_mH_{2m}-OH$$

must amount to at least 10 weight percent of the mixture.

**Revendication**

1. Durcisseur basique pour polyéthers glycidyliques, à base d'amines cycloaliphatiques, caractérisé en ce qu'il contient le composé ou les composés de formule générale

$$H_2N-C_nH_{2n}-A-C_mH_{2m}-OH$$

dans laquelle A représente un reste hydrocarboné aliphatique mono- ou polycyclique et n et m représentent des nombres entiers allant de 1 à 5.

2. Durcisseur basique selon la revendication 1, caractérisé en ce que l'on utilise le composé aminoéthyl-hydroxyméthyl-tricyclodécane.

3. Durcisseur basique selon les revendications 1 et 2, caractérisé en ce que l'on utilise le durcisseur selon les revendications 1 et 2 en mélange avec au moins un composant durcisseur connu à base d'amines aliphatiques, aromatiques ou cycloaliphatiques, le composé ou les composés de formule

$$H_2N-C_nH_{2n}-A-C_mH_{2m}-OH$$

devant représenter au moins 10% du poids du mélange.